# EUROPÄISCHE PATENTSCHRIFT

(11) **EP 1 882 853 B1**
(45) Veröffentlichungstag und Bekanntmachung des Hinweises auf die Patenterteilung: **27.06.2012**
(21) Anmeldenummer: 07003265.1
(22) Anmeldetag: 16.02.2007
(51) Int. Cl.: F03D 11/00, F03D 11/04, F03D 7/00, F03D 7/02, F03D 7/04

(54) **Windenergieanlage und Verfahren zum Betreiben einer Windenergieanlage**
Wind turbine and method for operating a wind turbine
Eolienne et procédé de fonctionnement d'une éolienne

(30) Priorität: 04.07.2006 DE 102006031144
(43) Veröffentlichungstag der Anmeldung: 30.01.2008
(73) Patentinhaber: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(56) Entgegenhaltungen:
- EP-A- 1 741 928
- WO-A-02/05041
- DE-A1- 10 309 825
- JP-A- 6 339 215
- US-A- 5 146 096
- US-A- 5 252 029

## Beschreibung

Die vorliegende Erfindung betrifft ein Verfahren zum Betreiben einer Windenergieanlage mit einem von Wind antreibbaren Rotor mit zumindest einem Rotorblatt, mit einem Generator zur Umwandlung der mechanischen Energie des Rotors in elektrische Energie sowie mit einem Turm, an dem der Rotor angeordnet ist. Des Weiteren betrifft die vorliegende Erfindung eine Windenergieanlage, die gemäß diesem Verfahren betrieben wird.

Windenergieanlagen sind bei starken Winden besonders großen Belastungen ausgesetzt. In der Regel werden Windenergieanlagen so konstruiert, dass sie im Extremfall Windgeschwindigkeiten widerstehen können, die denjenigen der sogenannten Jahrhundertböe entsprechen.

Allerdings treten auch in Europa immer häufiger extreme Wetterverhältnisse auf mit Windgeschwindigkeiten, die oberhalb der Jahrhundertböe anzusiedeln sind. Darüber hinaus gibt es beispielsweise in den USA oder Australien Standorte für Windenergieanlagen, an denen möglicherweise Wirbelstürme oder dergleichen auftreten können. Wirbelstürme können auf die Windenergieanlage einwirkende, windbedingte Kräfte verursachen, die die von einer Jahrhundertböe bewirkten Belastungen deutlich übersteigen.

Um Bauwerke allgemein gegenüber äußeren Einflüssen, insbesondere Wind, zu stabilisieren, sind Abspannungen bekannt. Dabei werden von dem zu stabilisierenden Bauwerk ausgehend mehrere Seile, Ketten oder dergleichen gespannt und diese im Erdboden verankert. Der dauerhafte Einsatz derartiger Abspannungen hätte bei Windenergieanlagen allerdings erhebliche Nachteile. Denn Windenergieanlagen sind dynamischen Belastungen ausgesetzt. Die durch die Abspannungen bewirkten Krafteinleitungen in die Windenergieanlage würden - insbesondere wegen der dynamischen Belastungen der Windenergieanlagen - zu Ermüdungsproblernen an denjenigen Punkten bzw. in denjenigen Bereichen der Windenergieanlage führen, in die die Kräfte eingeleitet werden.

Die DE 103 09 825 A1 zeigt eine Schwingungsdämpfungseinrichtung für Windenergieanlagen. Dabei wird die Windenergieanlage mittels einer Abspannungsvorrichtung abgespannt. Hydraulische Dämpfungsmittels sorgen dafür, dass die eingeleiteten Zugkräfte je nach zu kompensierenden Schwingungen variiert werden. Nachteiligerweise werden die von der Abspannungsvorrichtung in die Windenergieanlage eingeleiteten Kräfte allerdings dauerhaft eingeleitet, was zu den vorgenannten Problemen führt.

Aufgabe der vorliegenden Erfindung ist es daher, ein Verfahren zum Betreiben bzw. Stabilisieren einer Windenergieanlage anzugeben, mit dem die Windenergieanlage möglichst optimal stabilisiert werden kann bei gleichzeitig möglichst geringer Belastung der Windenergieanlage durch die entsprechenden Stabilisierungsmaßnahmen. Des Weiteren ist es Aufgabe der Erfindung, eine Windenergieanlage anzugeben, die gemäß diesem Verfahren betrieben werden kann.

Diese Aufgabe wird gelöst durch ein Verfahren mit den Merkmalen des Anspruches 1.

Erfindungsgemäß wird demnach zur Abspannung der Windenergieanlage eine Abspannvorrichtung der Windenergieanlage bedarfsweise automatisch von einem ungespannten Zustand, in dem keine abspannungsbedingten, die Anlage belastenden Kräfte in die Windenergieanlage eingeleitet werden, in einen gespannten, die Windenergieanlage stabilisierenden Zustand überführt.

Der besondere Vorteil der Erfindung liegt insbesondere darin, dass die Abspannung der Windenergieanlage nur bedarfsweise erfolgt. Nur dann, wenn beispielsweise durch die gegebenen Windverhältnisse eine Stabilisierung der Windenergieanlage erforderlich ist, wird die Abspannvorrichtung aktiviert. Außerhalb der Aktivierungszeit ist die Abspannvorrichtung ungespannt, so dass in die Windenergieanlage keine abspannungsbedingten, die Anlage belastenden Kräfte eingeleitet werden. Ermüdungen an den durch die Abspannung belasteten Bauteilen der Windenergieanlage werden wirksam verringert. Ein weiterer besonderer Vorteil der Erfindung liegt darin, dass die Überführung der Abspannvorrichtung von dem ungespannten Zustand in den gespannten Zustand automatisch bewirkt wird.

Die Überführung der Abspannvorrichtung von dem ungespannten Zustand in den gespannten Zustand erfolgt vorzugsweise abhängig von zukünftig zu erwartenden und/oder aktuellen Windverhältnissen, insbesondere Sturmböen oder dergleichen, und/oder abhängig von zu erwartenden und/oder aktuellen Erdbewegungen. Demnach wird die Abspannvorrichtung zur Stabilisierung der Windenergieanlage dann gespannt, wenn die Windverhältnisse oder andere äußere Einflüsse dies erforderlich machen. Wenn beispielsweise durch Vorhersagesysteme Stürme vorhergesagt werden mit derart hoher Windgeschwindigkeit, dass die Windenergieanlage schaden nehmen könnte, kann die Abspannvorrichtung gespannt werden. Ähnliches gilt bei zu erwartenden oder aktuell gemessenen Erd(boden)bewegungen bzw. Erdbeben, die die Windenergieanlage ins Wanken bringen könnten und daher eine zusätzliche Abspannung sinnvoll erscheinen lassen könnten.

In einer besonderen Ausführungsform der vorliegenden Erfindung kann die Spannung der Abspannvorrichtung erfolgen, d.h. deren Überführung von dem ungespannten Zustand in den gespannten Zustand, nachdem, beispielsweise durch ein spezialisiertes Institut, eine kritische Sturmvorhersage und/oder Erdbebenvorhersage erfolgt ist. Dann kann von dem die Vorhersage treffenden Institut, insbesondere von einem entsprechenden Signalerzeuger, ein Aktivierungssignal an eine Steuereinrichtung der Windenergieanlage gesandt werden, beispielsweise ein elektromagnetisches Signal, etwa ein Funksignal, ein über Internet übertragbares Signal oder dergleichen. Die Steuereinrichtung kann anschließend abhängig von dem Aktivierungssignal die Spannung der Abspannvorrichtung einleiten.

In einer weiteren Ausführungsform kann vorgesehen sein, die Windverhältnisse und/oder die Erdbodenbewegungen am Ort der Windenergieanlage und/oder im räumlichen Vorfeld der Windenergieanlage mittels geeigneter Sensoren zu erfassen, insbesondere auf der windzugewandten Seite der Windenergieanlage. Die Windverhältnisse können aber auch abgeleitet werden aus Betriebsparametern der Windenergieanlage, etwa aus der Drehzahl des Rotors, dem Windanstellwinkel des Rotorblattes oder dergleichen. Abhängig von den so bestimmten Windverhältnissen und/oder Erdbewegungen kann dann die Überführung der Abspannvorrichtung von dem ungespannten Zustand in den gespannten Zustand erfolgen.

Die Überführung der Abspannvorrichtung von dem ungespannten Zustand in den gespannten Zustand erfolgt vorzugsweise dann, wenn ein vorbestimmter Grenzwert eines die Windverhältnisse und/oder die Erdbewegungen kennzeichnenden Kennwerts überschritten wird.

Vorzugsweise wird die Abspannvorrichtung dann, wenn die Windverhältnisse und/oder die Erdbewegungen dies zulassen, wiederum in den ungespannten Zustand rücküberführt. Dies kann insbesondere nach Ablauf einer vorbestimmten Zeitdauer und/oder abhängig von aktuellen und/oder zu erwartenden Windverhältnissen und/oder abhängig von aktuellen und/oder zu erwartenden Erdbewegungen erfolgen. Wenn demnach keine Belastungen der Windenergieanlage mehr zu erwarten sind bzw. aktuell gemessen werden, kann die Rücküberführung eingeleitet werden, um die Windenergieanlage von den durch die Abspannung bewirkten Belastungen zu befreien.

Die Aufgabe der vorliegenden Erfindung wird des Weiteren gelöst durch eine Windenergieanlage mit den Merkmalen des Anspruches 8.

Entsprechend weist eine Windenergieanlage, die gemäß dem oben beschriebenen Verfahren betrieben wird, eine Abspannvorrichtung auf mit steuerbar spannbaren Spannmitteln, die bedarfsweise automatisch von einem ungespannten Zustand in einen gespannten, die Windenergieanlage stabilisierenden Zustand überführbar sind.

Die Spannmittel können etwa Seile sein, Ketten oder dergleichen, die mit einem Ende mit dem Turm der Windenergieanlage und/oder der Gondel verbunden sind. Vorzugsweise sind die Spannmittel mit dem anderen Ende unmittelbar oder mittelbar im Erdboden verankert oder verankerbar. In dieser Ausführungsform verlaufen die Spannmittel ausgehend von der Windenergieanlage schräg nach unten zu den jeweiligen, um die Windenergieanlage herum angeordneten Verankerungspunkten im Erdboden.

Mittels einer Steuerungs-/Regelungseinrichtung kann dann die Abspannvorrichtung abhängig von den zukünftig zu erwartenden und/oder aktuell erfassten Windverhältnissen und/oder Erdbewegungen steuerbar sein. Entsprechend werden die Spannmittel gespannt, wenn dies aufgrund der Windverhältnisse und/oder der Erdbewegungen erforderlich ist.

Zur automatischen Spannung der Spannmittel kann die Abspannvorrichtung einen motorischen, insbesondere elektromotorischen, hydraulischen oder pneumatischen Antrieb aufweisen, über den die Spannmittel spannbar sind.

In einer besonders bevorzugten Ausführungsform der vorliegenden Erfindung wird der Rotor der Windenergieanlage vor der Überführung der Abspannvorrichtung von dem ungespannten Zustand in den gespannten Zustand abgebremst, insbesondere durch geeignete Veränderung der Windanstellwinkel der Rotorblätter und/oder durch Betätigung mechanischer Rotorbremsen. Indem die Rotorblätter vor dem Spannen der Abspannvorrichtung abgebremst werden, können die Spannmittel der Abspannvorrichtung ungehindert gespannt werden, ohne dass durch die Rotation der Rotorblätter Kollisionen der Spannmittel mit den Rotorblättern befürchtet werden müssen. Die Spannmittel, etwa die Seile, können dann beispielsweise besonders weit oben am Turm der Windenergieanlage befestigt werden, ohne dass die im gespannten Zustand schräg von dem Turm nach unten verlaufenden Seile von den rotierenden Rotorblättern erfasst werden.

Weitere Merkmale der vorliegenden Erfindung ergeben sich aus den beigefügten Unteransprüchen, der nachfolgenden Beschreibung eines bevorzugten Ausführungsbeispieles sowie der beigefügten Zeichnung. Darin zeigt:

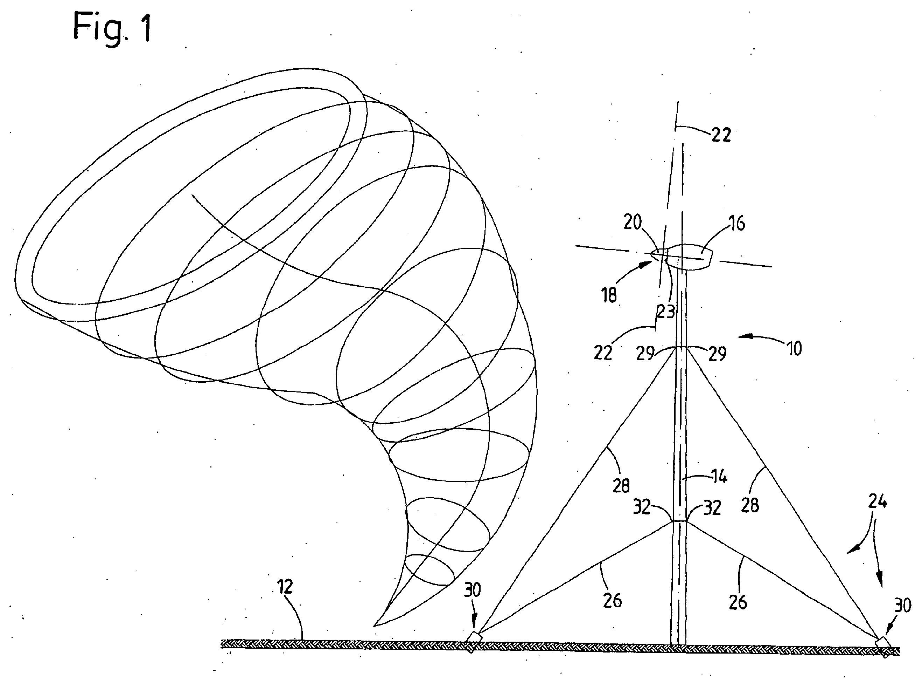

- Fig. 1: eine erfindungsgemäße Windenergieanlage mit Abspannvorrichtung in schematischer Seitenansicht.

In der Fig. 1 ist eine Windenergieanlage 10 dargestellt. Die Windenergieanlage 10 weist am oberen Ende eines vertikalen, auf einem horizontalen Untergrund 12 angeordneten Turms 14 eine auf der Turmoberseite angeordnete Gondel 16 auf. Wie der Fachmann des Standes der Technik weiß, sind für die genaue Ausbildung eines Turms 14 einer Windenergieanlage 10 vielfältige Ausführungsformen denkbar. Die Erfindung ist naturgemäß nicht auf die in der Zeichnung beschriebene, kegelstumpfförmige Form des Turms 14 beschränkt.

An einem windzugewandten Ende der Gondel 16 ist ein Rotor 18 angeordnet, der eine Nabe 20 aufweist. Mit der Nabe 20 verbunden sind drei Rotorblätter 22, wobei die Rotorblattwurzeln 23 der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Bewegung der Rotorachse wird von einem innerhalb der Gondel 16 angeordneten Generator in elektrischen Strom umgewandelt. Die Rotorblätter 22 überstreichen während der Rotation eine Kreisfläche. Über eine nicht dargestellte, allerdings den Fachleuten des Standes der Technik bekannte, Verstelleinrichtung können die Rotorblätter 22 einzeln in ihrer Stellung zum Wind verändert werden, das heißt, der Anstellwinkel der Rotorblätter 22 zum Wind ist einstellbar. Verschiedene Funktionen der Windenergieanlage 10 sind über eine nicht dargestellte, geeignete Steuerungseinrichtung steuerbar.

Die Windenergieanlage 10 ist an ein Stromnetz angeschlossen, in das die von dem Generator produzierte, elektrische Energie eingespeist werden kann.

Der grundsätzliche Aufbau der Windenergieanlage 10 mit zumindest annähernd horizontaler Rotorachse ist im Stand der Technik bekannt, so dass auf eine detaillierte Darstellung derselben verzichtet wird.

Der Turm 14 der Windenenergieanlage 10 wird mittels einer Abspannvorrichtung 24 abgespannt, d.h. gegenüber äußeren Einflüsse stabilisiert, etwa Windböen oder Erdbewegungen, insbesondere kleineren Erdbeben. Die Abspannvorrichtung 24 weist drei obere Spannmittel 28 sowie drei untere Spannmittel 26 auf, die jeweils am Turm 14 der Windenergieanlage 10 enden. Von den Spannmitteln 26, 28 sind in der vorliegenden Seitenansicht jeweils nur vier Spannmittel zu erkennen. Sämtliche Spannmittel 26, 28 sind als Seile ausgebildet.

Die oberen Spannmittel 28 sind im oberen Drittel des Turms 14 mit diesem verbunden. Sie verlaufen ausgehend von Befestigungspunkten 29 schräg nach unten und enden in der unmittelbaren Umgebung des Turms 14 an Verankerungseinrichtungen 30 der Abspannvorrichtung 24.

Die Verankerungseinrichtungen 30 sind über nicht gezeigte Verankerungsfundamente in dem Erdboden 12 verankert.

Die unteren Spannmittel 26 sind in der unteren Hälfte des Turms 14 mit diesem verbunden. Sie verlaufen ebenfalls ausgehend von Befestigungspunkten 32 schräg nach unten zu den Verankerungseinrichtungen 30 der Abspannvorrichtung 24.

Die Verankerungseinrichtungen 30 der Abspannvorrichtung 24 weisen Antriebe auf, nämlich Elektromotoren, über die die Spannmittel 26, 28 mittels nicht dargestellter Seilwinden von einem nicht dargestellten, ungespannten Zustand in den in der Fig. 1 gezeigten, gespannten Zustand überführt werden können. Dazu werden die Spannmittel 26, 28 jeweils in an sich bekannter Weise mittels der Seilwinden auf entsprechende Seilwindentrommeln aufgewickelt. Für eine Rücküberführung der Spannmittel 26, 28 in den ungespannten Zustand können die Spannmittel 26, 28 von der Seilwindentrommel abgewickelt werden. Im ungespannten Zustand hängen die Spannmittel 26, 28, d.h. die Seile, abschnittsweise schlaff an dem Turm 14 herunter bzw. liegen abschnittsweise auf dem Erdboden 12 auf.

Mittels einer der Windenergieanlage 10 zugeordneten Steuerungs-/Regelungseinrichtung ist die Abspannvorrichtung 24 abhängig von den zukünftig zu erwartenden und/oder aktuell erfassten Windverhältnissen und/oder Erdbewegungen steuerbar. Entsprechend werden die Spannmittel 26, 28 automatisch gespannt, wenn dies aufgrund der Windverhältnisse und/oder der Erdbewegungen erforderlich ist.

Konkret erfolgt die Überführung der Abspannvorrichtung 24 von dem ungespannten Zustand in den gespannten Zustand abhängig von einem Aktivierungssignal, dass der Steuerungs-/Regelungseinrichtung unmittelbar oder mittelbar von einem Wind und/oder Erdbewegungen vorhersagenden Institut übermittelt wird.

Alternativ oder zusätzlich ist denkbar, die Windverhältnisse und/oder die Erdbewegungen am Ort der Windenergieanlage 10 und/oder im räumlichen Vorfeld der Windenergieanlage 10 mittels geeigneter Sensoren zu erfassen, insbesondere auf der windzugewandten Seite der Windenergieanlage 10. Die Windverhältnisse können auch abgeleitet werden aus Betriebsparametern der Windenergieanlage 10, etwa aus der Drehzahl des Rotors 18, dem Windanstellwinkel des Rotorblattes 22 oder dergleichen.

Nach Ablauf einer vorbestimmten Zeitdauer und/oder abhängig von aktuellen Windverhältnissen und/oder abhängig von aktuellen Erdbewegungen wird die Abspannvorrichtung 24 in den ungespannten Zustand rücküberführt.

### Bezugszeichenliste:

- 10: Windenergieanlage
- 12: Untergrund
- 14: Turm
- 16: Gondel
- 18: Rotor
- 20: Nabe
- 22: Rotorblätter
- 23: Rotorblattwurzel
- 24: Abspannvorrichtung
- 26: Untere Spannmittel
- 28: Obere Spannmittel
- 29: Befestigungspunkte
- 30: Verankerungseinrichtung
- 32: Befestigungspunkte

## Patentansprüche

1. Verfahren zum Betreiben einer Windenergieanlage mit einem von Wind antreibbaren Rotor (18) mit zumindest einem Rotorblatt (22), mit einem Generator zur Umwandlung der mechanischen Energie des Rotors (18) in elektrische Energie sowie mit einem Turm (14), an dem der Rotor (18) angeordnet ist, **dadurch gekennzeichnet, dass** zur Abspannung der Windenergieanlage (10) eine Abspannvorrichtung (24) bedarfsweise automatisch von einem ungespannten Zustand, in dem keine abspannungsbedingten, die Anlage belastenden Kräfte in die Windenenergieanlage eingeleitet werden, in einen gespannten, die Windenergieanlage (10) stabilisierenden Zustand überführt wird.

2. Verfahren gemäß Anspruch 1, **dadurch gekennzeichnet, dass** die Überführung der Abspannvorrichtung (24) von dem ungespannten bzw. weniger gespannten Zustand in den gespannten bzw. stärker gespannten Zustand abhängig von zukünftig zu erwartenden und/oder aktuellen Windverhältnissen, insbesondere Sturmböen oder dergleichen, und/oder abhängig von zu erwartenden und/oder aktuellen Erdbewegungen, insbesondere Erdstößen, erfolgt.

3. Verfahren gemäß einem oder mehreren der vorhergehenden Ansprüche, **dadurch gekennzeichnet, dass** die Überführung der Abspannvorrichtung (24) von dem ungespannten bzw. weniger gespannten Zustand in den gespannten bzw. stärker gespannten Zustand erfolgt, wenn ein vorbestimmter Grenzwert eines die Windverhältnisse und/oder die Erdbewegungen kennzeichnenden Kennwerts überschritten wird.

4. Verfahren gemäß einem oder mehreren der vorhergehenden Ansprüche, **dadurch gekennzeichnet, dass** die Abspannvorrichtung (24) in den ungespannten bzw. weniger gespannten Zustand rücküberführt wird, insbesondere nach Ablauf einer vorbestimmten Zeitdauer und/oder abhängig von aktuellen und/oder zu erwartenden Windverhältnissen und/oder abhängig von aktuellen und/oder zu erwartenden Erdbewegungen.

5. Verfahren gemäß einem oder mehreren der vorhergehenden Ansprüche, **dadurch gekennzeichnet, dass** die Windverhältnisse und/oder die Erdbewegungen am Ort der Windenergieanlage (10) und/oder im räumlichen Vorfeld der Windenergieanlage (10) mittels geeigneter Sensoren erfasst werden, insbesondere auf der windzugewandten Seite der Windenergieanlage (10), und/oder abgeleitet werden aus Betriebsparametern der Windenergieanlage (10), etwa aus der Drehzahl des Rotors (18), dem Windanstellwinkel des Rotorblattes (22) oder dergleichen.

6. Verfahren gemäß einem oder mehreren der vorhergehenden Ansprüche, **dadurch gekennzeichnet, dass** die Überführung der Abspannvorrichtung (24) von dem ungespannten bzw. weniger gespannten Zustand in den gespannten bzw. stärker gespannten Zustand abhängig von einem Aktivierungssignal erfolgt, das einer der Windenergieanlage (10) zugeordneten Steuerungseinrichtung unmittelbar oder mittelbar von einem Wind und/oder Erdbewegungen vorhersagenden Institut übermittelt wird.

7. Verfahren gemäß einem oder mehreren der vorhergehenden Ansprüche, **dadurch gekennzeichnet, dass** der Rotor (18) der Windenergieanlage (10) vor der Überführung der Abspannvorrichtung von dem ungespannten bzw. weniger gespannten Zustand in den gespannten bzw. stärker gespannten Zustand abgebremst wird, insbesondere durch geeignete Veränderung der Windanstellwinkel der Rotorblätter (22) und/oder durch Betätigung mechanischer Rotorbremsen.

8. Windenergieanlage mit einem von Wind antreibbaren Rotor (18) mit zumindest einem Rotorblatt (22), mit einem Generator zur Umwandlung der mechanischen Energie des Rotors (18) in elektrische Energie, mit einem Turm (14), an dem der Rotor (18) angeordnet ist, **gekennzeichnet durch** eine Abspannvorrichtung (24), die steuerbar spannbare Spannmittel (26, 28) aufweist, die bedarfsweise automatisch von einem ungespannten Zustand, in dem keine abspannungsbedingten, die Anlage belastenden Kräfte in die Windenenergieanlage eingeleitet werden, in einen gespannten, die Windenergieanlage (10) stabilisierenden Zustand überführbar sind.

9. Windenergieanlage gemäß Anspruch 8, **dadurch gekennzeichnet, dass** die Abspannvorrichtung (24) mittels einer Steuerungs-/Regelungseinrichtung abhängig von zukünftig zu erwartenden und/oder aktuell erfassten Windverhältnissen und/oder Erdstößen steuerbar ist.

10. Windenergieanlage gemäß einem oder mehreren der Ansprüche 8-9, **dadurch gekennzeichnet, dass** die Spannmittel (26, 28), etwa Seile, Ketten oder dergleichen, mit ihrem einen Ende mit dem Turm (14) und/oder der Gondel (16) der Windenergieanlage (10) verbunden sind.

11. Windenergieanlage gemäß einem oder mehreren der Ansprüche 8 - 10, **dadurch gekennzeichnet, dass** die Spannmittel (26, 28) mit dem dem Turm (14) und/oder der Gondel (16) entgegengesetzten Ende unmittelbar oder mittelbar im Erdboden verankert oder verankerbar sind.

12. Windenergieanlage gemäß einem oder mehreren der Ansprüche 8-11, **dadurch gekennzeichnet, dass** die Abspannvorrichtung (24) einen motorischen, elektromotorischen, hydraulischen oder pneumatischen Antrieb aufweist, über den die Spannmittel (26, 28) spannbar sind.

## Claims

1. Method for operation of a wind energy installation having a rotor (18) which can be driven by wind and has at least one rotor blade (22), having a generator for conversion of the mechanical energy of the rotor (18) to electrical energy, and having a tower (14) on which the rotor (18) is arranged, **characterized in that,** in order to guy the wind energy installation (10), a guy apparatus (24) is changed as required automatically from an unstressed state, in which no guy-dependent forces loading the installation are introduced into the wind energy installation, to a stressed state which stabilizes the wind energy installation (10).

2. Method according to Claim 1, **characterized in that** the guy apparatus (24) is changed from the unstressed or less-stressed state to the stressed or more-stressed state as a function of current wind conditions and/or wind conditions to be expected in the future, in particular storm gusts or the like, and/or as a function of current earth movements and/or earth movements to be expected, in particular earthquakes.

3. Method according to one or more of the preceding claims, **characterized in that** the guy apparatus (24) is changed from the unstressed or less-stressed state to the stressed or more-stressed state when a characteristic value which characterizes the wind conditions and/or the earth movements exceeds a predetermined limit value.

4. Method according to one or more of the preceding claims, **characterized in that** the guy apparatus (24) is changed back to the unstressed or less-stressed state in particular after a predetermined time period has elapsed and/or as a function of current wind conditions and/or wind conditions to be expected and/or as a function of current earth movements and/or earth movements to be expected.

5. Method according to one or more of the preceding claims, **characterized in that** the wind conditions and/or the earth movements at the location of the wind energy installation (10) and/or in the physical vicinity of the wind energy installation (10) are recorded by means of suitable sensors, in particular on the side of the wind energy installation (10) facing the wind, and/or are derived from operating parameters of the wind energy installation (10), for example from the rotation speed of the rotor (18), from the wind incidence angle of the rotor blade (22) or the like.

6. Method according to one or more of the preceding claims, **characterized in that** the guy apparatus (24) is changed from the unstressed or less-stressed state to the stressed or more-stressed state as a function of an activation signal which is transmitted to a control device, which is associated with the wind energy installation (10), directly or indirectly from an institute which predicts wind and/or earth movements.

7. Method according to one or more of the preceding claims, **characterized in that** the rotor (18) of the wind energy installation (10) is braked before the guy apparatus is changed from the unstressed or less-stressed state to the stressed or more-stressed state, in particular by suitable variation of the wind incidence angle of the rotor blades (22) and/or by operation of mechanical rotor brakes.

8. Wind energy installation having a rotor (18) which can be driven by wind and has at least one rotor blade (22), having a generator for conversion of the mechanical energy of the rotor (18) to electrical energy, having a tower (14) on which the rotor (18) is arranged, **characterized by** a guy apparatus (24) which has tensioning means (26, 28), which can be tensioned controllably and can be changed automatically from an unstressed state, in which no guy-dependent forces loading the installation are introduced into the wind energy installation, to a stressed state which stabilizes the wind energy installation (10).

9. Wind energy installation according to Claim 8, **characterized in that** the guy apparatus (24) can be controlled by means of an open-loop/closed-loop control device as a function of wind conditions and/or earthquakes which are currently being recorded and/or are to be expected in the future.

10. Wind energy installation according to one or more of Claims 8-9, **characterized in that** the tensioning means (26, 28), for example cables, chains or the like, are connected at their one end to the tower (14) and/or to the nacelle (16) of the wind energy installation (10).

11. Wind energy installation according to one or more of Claims 8-10, **characterized in that** the tensioning means (26, 28) are anchored or can be anchored directly or indirectly in the ground at the opposite end to the tower (14) and/or to the nacelle (16).

12. Wind energy installation according to one or more of Claims 8 - 11, **characterized in that** the guy apparatus (24) has a motor, electric motor, hydraulic or pneumatic drive, via which the tensioning means (26, 28) can be stressed.

## Revendications

1. Procédé de conduite d'une installation éolienne de production d'énergie dotée
d'un rotor (18) qui est entraîné par le vent et qui est lui-même doté d'au moins une pale de rotor (22),
d'un générateur qui convertit l'énergie mécanique du rotor (18) en énergie électrique ainsi que
d'un pylône (14) sur lequel le rotor (18) est disposé,
**caractérisé en ce que**
pour mettre hors serrage l'installation éolienne (10) de production d'énergie, un dispositif (24) de mise hors serrage est amené si nécessaire et automatiquement d'un état hors serrage dans lequel les forces qui agissent sur l'installation suite à la mise hors serrage ne sont pas introduites dans l'installation éolienne de production d'énergie à un état sous serrage qui stabilise l'installation éolienne (10) de production d'énergie.

2. Procédé selon la revendication 1, **caractérisé en ce que** le transfert du dispositif (24) de mise hors serrage depuis l'état hors serrage ou un état sous moindre serrage jusque dans l'état sous serrage ou un état sous plus fort serrage s'effectue en fonction de conditions de vent attendues dans le futur et/ou effectives, en particulier de bourrasques ou similaires, et/ou en fonction des déplacements du sol attendus et/ou effectifs, en particulier de tremblements de terre.

3. Procédé selon l'une ou plusieurs des revendications précédentes, **caractérisé en ce que** le transfert du dispositif (24) de mise hors serrage depuis l'état hors serrage ou un état sous moindre serrage jusque dans l'état sous serrage ou un état sous plus fort serrage s'effectue si une valeur limite prédéterminée d'une valeur caractéristique qui caractérise les conditions de vent et/ou les déplacements du sol est dépassée.

4. Procédé selon l'une ou plusieurs des revendications précédentes, **caractérisé en ce que** le dispositif (24) de mise hors serrage est ramené dans l'état hors serrage ou sous moindre serrage en particulier après l'écoulement d'une durée prédéterminée et/ou en fonction de conditions de vent effectives et/ou attendues et/ou en fonction de déplacements du sol effectifs et/ou attendus.

5. Procédé selon l'une ou plusieurs des revendications précédentes, **caractérisé en ce que** les conditions de vent et/ou les déplacements du sol sont détectés au moyen de détecteurs appropriés sur le site de l'installation éolienne (10) de production d'énergie et/ou dans l'espace situé en amont de l'installation éolienne (10) de production d'énergie, en particulier sur le côté au vent de l'installation éolienne (10) de production d'énergie, et/ou sont dérivés de paramètres de fonctionnement de l'installation éolienne (10) de production d'énergie, par exemple de la vitesse de rotation du rotor (18), de l'angle d'incidence de la pale de rotor (22) par rapport au vent ou similaires.

6. Procédé selon l'une ou plusieurs des revendications précédentes, **caractérisé en ce que** le transfert du dispositif (24) de mise hors serrage depuis l'état hors serrage ou un état sous moindre serrage jusque dans l'état sous serrage ou un état sous plus fort serrage s'effectue en fonction d'un signal d'activation qui est transmis directement ou indirectement à un dispositif de commande associé à l'installation éolienne (10) de production d'énergie par un institut de prévision du vent et/ou des déplacements du sol.

7. Procédé selon l'une ou plusieurs des revendications précédentes, **caractérisé en ce qu'**avant le transfert du dispositif de mise hors serrage depuis l'état hors serrage ou un état sous moindre serrage jusque dans l'état sous serrage ou un état sous plus fort serrage, le rotor (18) de l'installation éolienne (10) de production d'énergie est freiné en particulier en modifiant de manière appropriée l'angle d'incidence au vent des pales de rotor (22) et/ou par actionnement de freins mécaniques du rotor.

8. Installation éolienne de production d'énergie dotée
d'un rotor (18) entraîné par le vent et lui-même doté d'au moins une pale de rotor (22),
d'un générateur qui convertit l'énergie mécanique du rotor (18) en énergie électrique et
d'un pylône (14) sur lequel le rotor (18) est disposé,
**caractérisée par**
un dispositif (24) de mise hors serrage qui présente des moyens (26, 28) de serrage qui peuvent être activés de manière asservie et qui en cas de besoin peuvent être amenés automatiquement d'un état hors serrage dans lequel les forces qui sollicitent l'installation suite à la mise hors serrage ne sont pas introduites dans l'installation éolienne de production d'énergie à un état sous serrage qui stabilise l'installation éolienne (10) de production d'énergie.

9. Installation éolienne de production d'énergie selon la revendication 8, **caractérisée en ce que** le dispositif (24) de mise hors serrage peut être commandé au moyen d'une installation de commande et/ou de régulation en fonction de conditions de vent attendues dans le futur et/ou effectivement saisies, et/ou de tremblements de terre.

10. Installation éolienne de production d'énergie selon l'une ou plusieurs des revendications 8 et 9, **caractérisée en ce que** les moyens (26, 28) de serrage, par exemple des câbles, des chaînes ou similaires, sont reliés à une de leur extrémité au pylône (14) et/ou à la nacelle (16) de l'installation éolienne (10) de production d'énergie.

11. Installation éolienne de production d'énergie selon l'une ou plusieurs des revendications 8 à 10, **caractérisée en ce qu'**à leur extrémité non tournée vers le pylône (14) et/ou vers la nacelle (16), les moyens de serrage (26, 28) sont ancrés ou peuvent être ancrés directement ou indirectement dans le sol.

12. Installation éolienne de production d'énergie selon l'une ou plusieurs des revendications 8 à 11, **caractérisée en ce que** le dispositif de desserrage (24) présente un entraînement par moteur, par moteur électrique, hydraulique ou pneumatique, qui permet de serrer les moyens de serrage (26, 28).
